# FASCICULE DE BREVET EUROPEEN

(11) **EP 2 339 220 B1**
(45) Date de publication et mention de la délivrance du brevet: **21.03.2012**
(21) Numéro de dépôt: 10195592.0
(22) Date de dépôt: 17.12.2010
(51) Int. Cl.: F16L 41/06, F16L 55/124

(54) **Dispositif d'intervention sur une conduite de gaz et procédé correspondant**
Vorrichtung zum Eingreifen in eine Gasleitung und entsprechendes Verfahren
Device for working on a gas pipe and corresponding method

(30) Priorité: 28.12.2009 FR 0959613
(43) Date de publication de la demande: 29.06.2011
(73) Titulaire: GDF SUEZ, 92400 Courbevoie (FR)
(72) Inventeur: Bernier, Alain, 91100 Corbeil Essonnes (FR); Leme, David, 64990 Villefranque (FR)
(74) Mandataire: Novagraaf Technologies

(56) Documents cités:
- US-A- 4 177 827
- US-A- 5 076 311
- US-A- 5 152 310
- US-A- 5 316 037

## Description

L'invention concerne, de façon générale, la réfection et l'entretien des réseaux de distribution de gaz.

Plus précisément, l'invention concerne, selon un premier de ses aspects, un dispositif d'intervention sur une conduite de gaz.

Il est connu, notamment par le document de brevet FR 2 931 517, d'insérer dans une conduite de gaz un dispositif de contrôle d'écoulement, encore appelé "vanne de sécurité", permettant de prévenir les accidents que pourrait provoquer la rupture intempestive de cette conduite.

En particulier, le procédé décrit dans le document de brevet FR 2 931 517 permet d'insérer une vanne de sécurité à travers un robinet de branchement, pour autant que ce robinet offre un passage interne de diamètre suffisant.

Dans le cas où le robinet de branchement en place présente un passage de diamètre insuffisant, l'insertion d'une vanne de sécurité dans la conduite à travers ce robinet est donc a priori impossible.

Dès lors, il est nécessaire d'intervenir sur la conduite pour remplacer le robinet avant de pouvoir insérer une vanne de sécurité dans cette dernière.

Le document de brevet US 5 152 310 divulgue une vanne de sécurité se positionnant sur une conduite par des parties reliées l'une à l'autre de façon réversible par des moyens de serrage. Cette vanne comprend des moyens de perforation perpendiculaires à la conduite comprenant un arbre monté en coulissement et rotation dans un premier logement et un outil de perforation coaxial à l'arbre. L'ensemble est étanche de façon à permettre aux moyens de perforation de perforer la conduite et de créer un canal de dérivation du fluide de la conduite.

Dans ce contexte, l'invention a notamment pour but de proposer un dispositif adapté à cette intervention.

A cette fin, le dispositif de l'invention, par ailleurs conforme à la définition générique qu'en donne le préambule ci-dessus, est essentiellement caractérisé en ce qu'il comprend au moins un boîtier étanche, des moyens de perforation et des moyens d'obturation, en ce que le boîtier est traversé, suivant une première direction, par un perçage adapté à recevoir la conduite de façon étanche, en ce que le boîtier comprend des première et deuxième parties disposées de part et d'autre du plan médian du perçage et reliées l'une à l'autre de façon réversible par des moyens de serrage, en ce que les première et deuxième parties du boîtier présentent respectivement un alésage traversant et un alésage borgne coaxiaux, formant ensemble un premier logement s'étendant suivant une deuxième direction perpendiculaire à la première et traversant le perçage, en ce que les moyens de perforation comprennent un arbre monté à rotation et à coulissement de façon étanche dans le premier logement, et un outil de perforation coaxial à l'arbre, en ce que l'arbre présente une première extrémité d'actionnement externe à la première partie du boîtier et une deuxième extrémité interne au boîtier et portant l'outil de perforation, et en ce que les moyens d'obturation comprennent au moins un manchon expansible entourant l'arbre, l'alésage borgne étant dimensionné pour pouvoir accueillir l'outil de perforation dans la position de l'arbre dans laquelle le manchon s'étend au moins d'un bord à l'autre du perçage. Le dispositif dispose en outre de moyens de sectionnement de la conduite de gaz.

Il est par exemple judicieux de prévoir que l'arbre présente un relief radial formant butée pour une première extrémité du manchon, que les moyens d'obturation comprennent en outre une douille entourant l'arbre et montée coulissante dans le premier logement à la fois par rapport à l'arbre et par rapport à ce premier logement, et que la douille présente une première extrémité externe à la première partie du boîtier et permettant l'actionnement de cette douille, et une deuxième extrémité formant butée pour une deuxième extrémité du manchon, ce dont il résulte que les deux extrémités du manchon peuvent être rapprochées l'une de l'autre par coulissement relatif de l'arbre et de la douille.

De préférence, le perçage est cylindrique et l'outil de perforation est conçu pour pratiquer dans la conduite un orifice traversant de section circulaire dont le rayon est au moins égal à 90 pourcent du rayon du perçage.

Dans ce cas, le boîtier présente par exemple un deuxième logement, indépendant du premier logement, s'étendant suivant la deuxième direction, traversant le perçage, et dans lequel sont logés les moyens de sectionnement, ces moyens pouvant avantageusement comprendre un outil de coupe travaillant en cisaillement.

Il est notamment possible de prévoir que les moyens de sectionnement comprennent en outre une tige d'actionnement manoeuvrable depuis l'extérieur de la première partie du boîtier et un lien cinématique, que l'outil de coupe comprenne deux lames mobiles dans un plan de coupe perpendiculaire à la première direction, et que le lien cinématique relie la tige d'actionnement aux lames et transforme respectivement une traction et une poussée de la tige d'actionnement en un rapprochement et en un éloignement réciproque des lames.

Dans un mode de réalisation préféré, il est prévu que le lien cinématique comprenne un répartiteur d'effort, une barre de guidage, deux pivots d'extrémité et deux pivots intermédiaire, que chaque lame porte un pivot d'extrémité et un pivot intermédiaire, que le répartiteur soit lié en translation à la tige d'actionnement, soit mobile suivant la deuxième direction, et porte les pivots d'extrémité des deux lames, que la barre de guidage soit montée fixe dans le boîtier entre le répartiteur et le perçage et s'étende suivant une troisième direction perpendiculaire à chacune des première et deuxième directions, et que le pivot intermédiaire de chaque lame soit monté coulissant sur la barre de guidage.

L'invention concerne encore un procédé d'intervention sur un réseau de distribution de gaz comprenant une prise de branchement, une conduite, et un coffret de branchement, le coffret comprenant un robinet de branchement et une tête de raccordement à un sous-réseau de consommation, le robinet étant relié, vers l'amont, à la prise de branchement par l'intermédiaire de la conduite, et, vers l'aval, à la tête de raccordement, ce procédé utilisant un dispositif tel que défini précédemment et comprenant les opérations consistant à : placer ledit dispositif sur la conduite; manoeuvrer l'arbre du dispositif pour perforer et obturer la conduite; remplacer le robinet par un nouveau robinet et fermer le robinet nouvellement monté; installer un sas étanche sur la tête de raccordement; manoeuvrer l'arbre du dispositif pour déplacer les moyens d'obturation et de perforation hors de la conduite; introduire à travers le sas une vanne de sécurité dans la conduite; déclencher à la fermeture la vanne de sécurité une fois installée dans la conduite en amont de la perforation pratiquée par le dispositif; démonter le dispositif; et réparer la conduite pour lui restituer son étanchéité.

Dans le cas où il utilise un dispositif doté de moyens de sectionnement, ce procédé d'intervention peut comprendre une opération supplémentaire, mise en oeuvre préalablement au démontage du dispositif et consistant à sectionner la conduite pour faciliter sa réparation.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue schématique d'un réseau de distribution de gaz, du type de ceux sur lesquels l'invention permet d'intervenir;
- la figure 2 est une vue en perspective d'une première partie d'un dispositif conforme à un mode de réalisation préféré de l'invention;
- la figure 3 est une vue en perspective d'une deuxième partie d'un dispositif conforme au mode de réalisation préféré de l'invention;
- la figure 4 est une vue en perspective du dispositif conforme au mode de réalisation préféré de l'invention, illustré à échelle réduite par rapport à celle des figures 2 et 3;

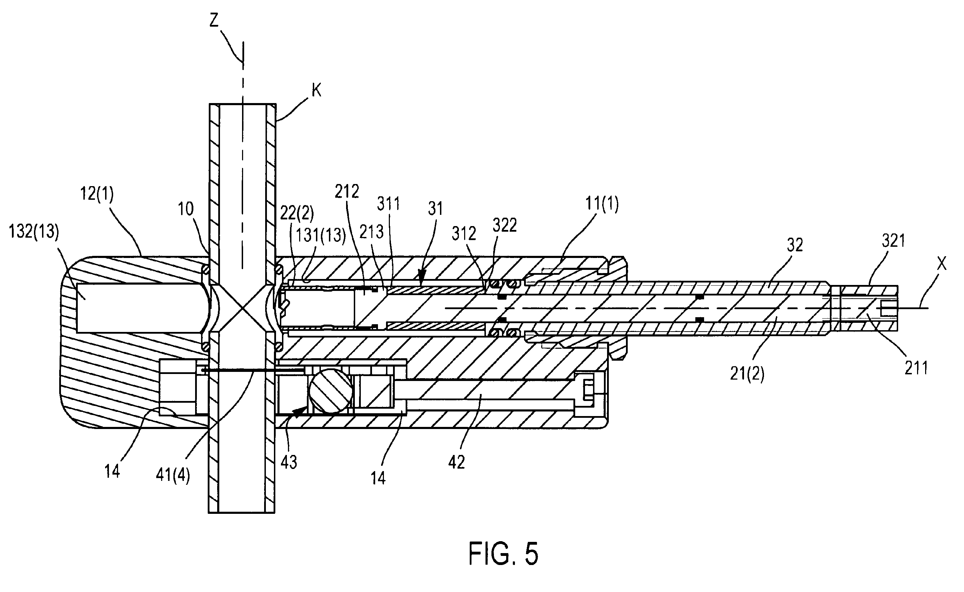

- la figure 5 est une vue en coupe axiale du dispositif illustré à la figure 4, représenté en place sur une conduite de gaz;
- la figure 6 est une vue en perspective et en coupe axiale du dispositif illustré à la figure 4, représenté après perforation de la conduite de gaz;
- la figure 7 est une vue en perspective et en coupe axiale du dispositif illustré à la figure 4, représenté dans un état dans lequel les moyens d'obturation obturent la conduite de gaz;

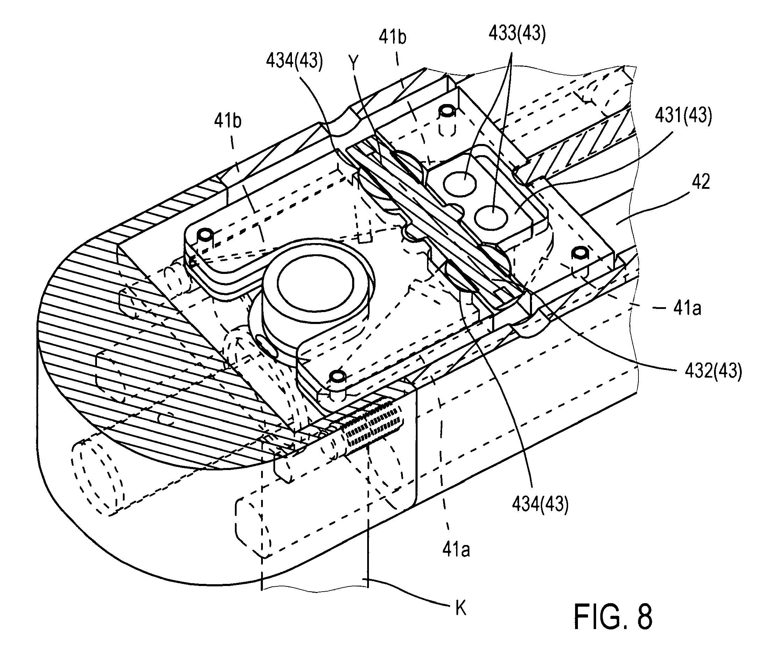

- la figure 8 est une vue partielle en perspective et en coupe longitudinale à échelle agrandie du dispositif illustré à la figure 4, et sur laquelle les moyens de sectionnement sont représentés dans un état préparant le sectionnement de la conduite de gaz; et
- la figure 9 est une vue partielle en perspective et en coupe longitudinale à échelle agrandie du dispositif illustré à la figure 4, et sur laquelle les moyens de sectionnement sont représentés après le sectionnement de la conduite de gaz.

Les principaux éléments illustrés sur les figures et invoqués dans la présente description sont repérés par des références entre parenthèses ou non, les références entre parenthèses étant affectées aux ensembles auxquels appartiennent les éléments repérés par des références sans parenthèses.

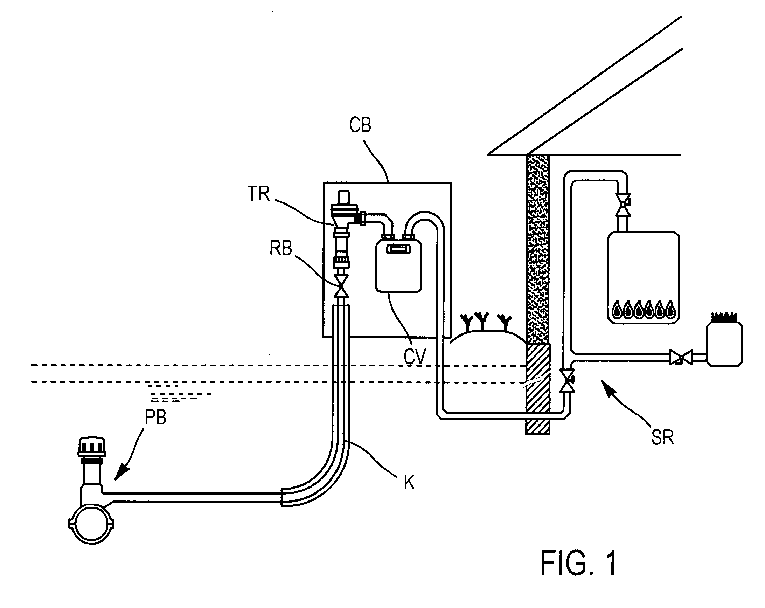

Comme annoncé précédemment, l'invention est typiquement applicable à un réseau de distribution de gaz tel qu'illustré à la figure 1.

Traditionnellement, un tel réseau comprend notamment une prise de branchement PB, une conduite K, et un coffret de branchement CB.

Le coffret de branchement CB comprend un robinet de branchement RB et une tête de raccordement TR, cette tête de raccordement étant reliée à un sous-réseau SR de consommation par l'intermédiaire d'un compteur volumétrique de gaz CV.

Le gaz est distribué, de l'amont vers l'aval, depuis la prise de branchement PB jusqu'au sous-réseau de consommation SR. Par ailleurs, le robinet RB est relié, vers l'amont, à la prise de branchement PB par l'intermédiaire de la conduite K, et, vers l'aval, à la tête de raccordement TR.

Le dispositif de l'invention, qui permet d'intervenir sur la conduite K, par exemple sur la section de cette conduite située dans le coffret CB sous le robinet RB, comprend notamment un boîtier étanche 1, des moyens de perforation 2 et des moyens d'obturation 3.

Le boîtier 1 est traversé, suivant une direction Z qui est verticale dans la position opérationnelle du dispositif, par un perçage 10 adapté à recevoir la conduite K de façon étanche.

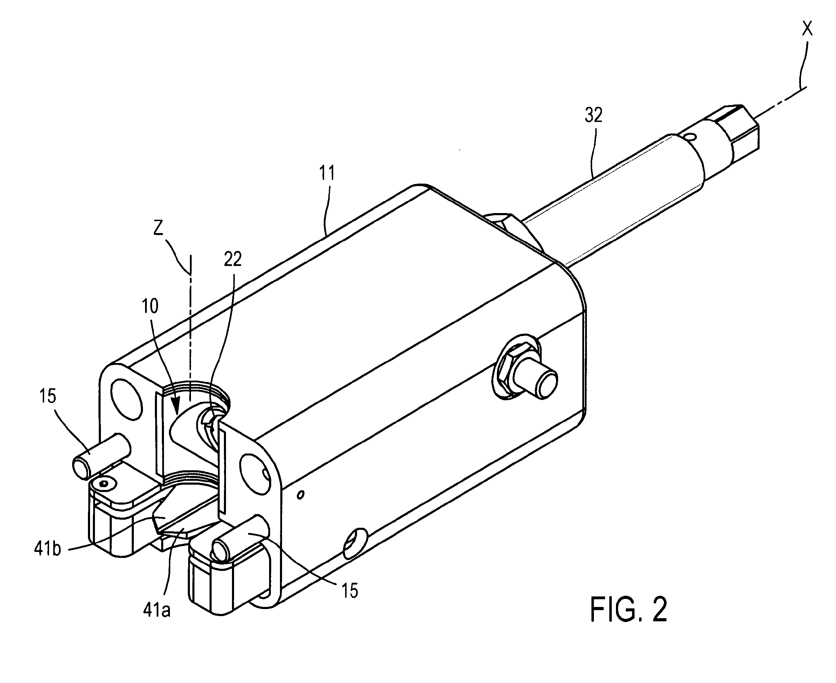

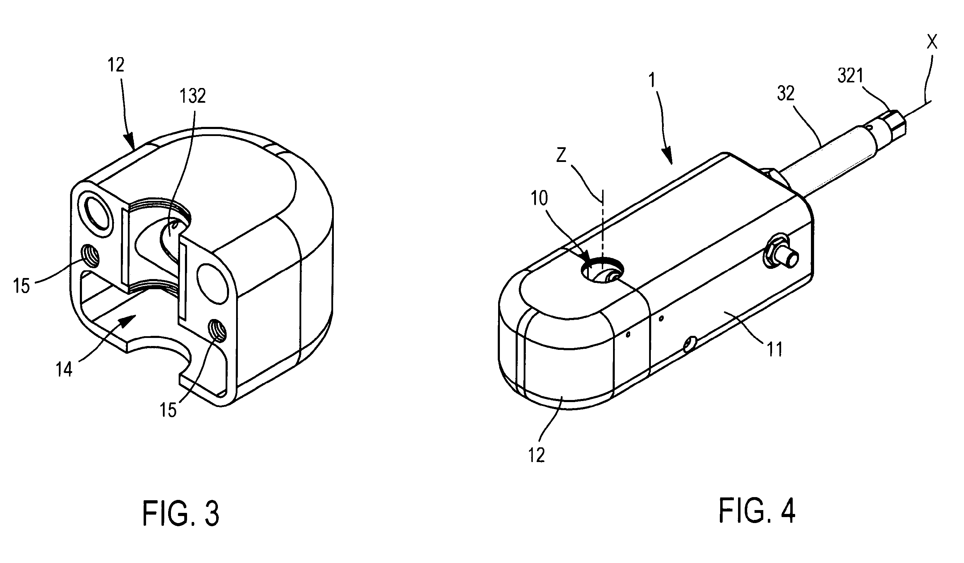

Comme le montrent les figures 2 à 4, le boîtier 1 est formé de deux parties, 11 et 12, qui sont disposées de part et d'autre du plan médian du perçage 10 et qui sont reliées l'une à l'autre de façon réversible par des moyens de serrage 15, par exemple du type à vis et écrou.

La partie 11 du boîtier 1 présente un alésage traversant 131 et la partie 12 de ce boîtier présente un alésage borgne 132, coaxial à l'alésage traversant 131.

Les alésages 131 et 132 forment ensemble un premier logement 13 qui traverse le perçage 10 et qui s'étend suivant une direction X perpendiculaire à la direction Z du perçage 10, c'est-à-dire suivant une direction horizontale dans la position opérationnelle du dispositif.

Les moyens de perforation 2 comprennent un arbre 21 et un outil de perforation 22, cet outil étant coaxial à l'arbre 21 et porté par une extrémité 212 de l'arbre, à l'intérieur du boîtier 1.

L'arbre 21, qui est monté à rotation et à coulissement de façon étanche dans le premier logement 13, présente une extrémité d'actionnement 211 qui est externe à la partie 11 du boîtier 1 et par laquelle cet arbre peut être mû dans le premier logement 13.

Plus précisément, l'entraînement de l'arbre 21 en rotation et en translation dans le premier logement 13 permet à l'outil de perforation 22 de pratiquer un orifice traversant dans la conduite K.

Les moyens d'obturation 3 comprennent au moins un manchon expansible 31 qui entoure une section longitudinale de l'arbre 21 située entre les extrémités 211 et 212 de cet arbre.

Une fois qu'un orifice traversant a été pratiqué dans la conduite K par l'outil de perforation 22, cet orifice peut être obturé par introduction du manchon 31.

Pour ce faire, l'alésage borgne 132 est dimensionné pour pouvoir accueillir l'outil de perforation 22 dans la position de l'arbre 21 dans laquelle le manchon 31 s'étend au moins d'un bord à l'autre du perçage 10.

Le manchon 31 peut être constitué d'une matière intrinsèquement expansible, de manière à se gonfler spontanément dès qu'il est introduit dans l'orifice traversant pratiqué dans la conduite K.

Néanmoins, en variante ou de façon cumulative, le manchon peut être élastiquement déformable et les moyens d'obturation 3 peuvent comprendre une douille 32 entourant également l'arbre 21.

La douille 32 est montée coulissante dans le premier logement 13 à la fois par rapport à l'arbre 21 et par rapport à ce premier logement 13.

L'arbre 21 présente un relief radial 213 qui forme butée pour une première extrémité 311 du manchon 31, et une extrémité 322 de la douille 32 forme butée pour une deuxième extrémité 312 de ce manchon 31.

Par ailleurs, la douille 32 présente une extrémité 321 qui est externe à la partie 11 du boîtier 1 et qui permet l'actionnement de cette douille 32.

Ainsi, le coulissement relatif de l'arbre 21 et de la douille 32 dans un sens propre à rapprocher le relief radial 213 et l'extrémité 322 de la douille 32 se traduit par un rapprochement mutuel des extrémités 311 et 312 du manchon 31, ce qui entraîne une augmentation du diamètre du manchon 31 opérant ou favorisant l'obturation de l'orifice traversant pratiqué dans la conduite K.

De préférence, le perçage 10 du dispositif est cylindrique, et l'orifice traversant pratiqué dans la conduite K présente une section circulaire dont le rayon est au moins égal à 90 pourcent du rayon du perçage 10.

Le dispositif peut aussi comprendre des moyens de sectionnement 4 propres à sectionner la conduite de gaz K, comprenant par exemple un outil de coupe 41 travaillant en cisaillement, et logés dans un deuxième logement 14 du boîtier 1.

Le logement 14 est alors de préférence indépendant du premier logement 13 et s'étend suivant la deuxième direction X en traversant le perçage 10.

L'outil de coupe 41 comprend par exemple deux lames, 41a et 41b, mobiles dans un plan de coupe perpendiculaire à la direction Z.

Outre l'outil de coupe 41, les moyens de sectionnement 4 comprennent par exemple une tige d'actionnement 42 manoeuvrable depuis l'extérieur de la première partie 11 du boîtier 1, et un lien cinématique 43.

Le lien cinématique 43 relie la tige d'actionnement 42 aux lames 41a et 41b de l'outil de coupe 41 et transforme respectivement une traction et une poussée de la tige d'actionnement 42 en un rapprochement et en un éloignement réciproque des lames 41a et 41b.

Pour ce faire, le lien cinématique 43 comprend par exemple un répartiteur d'effort 431, une barre de guidage 432, deux pivots d'extrémité 433 et deux pivots intermédiaires 434, chacune des lames 41a et 41b portant l'un des pivots d'extrémité 433 et l'un des pivots intermédiaires 434.

Le répartiteur 431, qui est lié en translation à la tige d'actionnement 42 et qui est donc mobile suivant la direction X, porte les pivots d'extrémité 433 des deux lames 41a et 41b.

La barre de guidage 432 est montée fixe dans le boîtier 1 entre le répartiteur 431 et le perçage 10.

Cette barre de guidage 432 s'étend suivant une troisième direction Y, qui est perpendiculaire à chacune des directions Z et X.

Par ailleurs, le pivot intermédiaire 434 de chacune des lames 41a et 41b est monté coulissant sur la barre de guidage 432.

Pour chacune des lames 41a et 41b, le pivot d'extrémité 433 est plus proche du plan médian passant par les axes Z et X que le pivot intermédiaire 434.

Dans ces conditions, une traction de la tige d'actionnement 42 vers l'extérieur du boîtier 1 a pour effet de rapprocher l'un de l'autre les pivots intermédiaires 434 des deux lames 41a et 41b, et donc d'actionner ces lames à la manière de celles d'un sécateur.

L'invention concerne encore un procédé d'intervention sur un réseau de distribution de gaz, qui peut être mis en oeuvre grâce au dispositif tel que précédemment décrit.

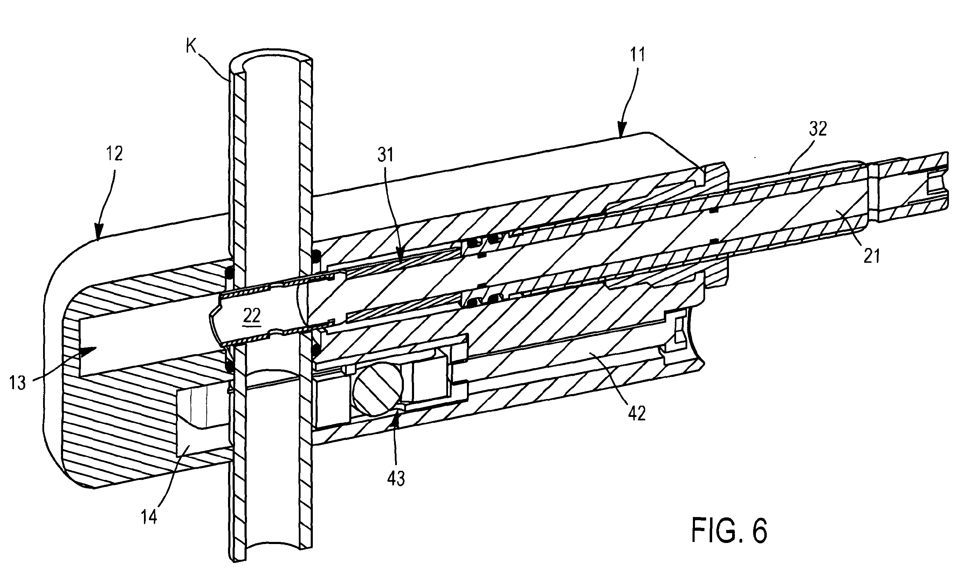

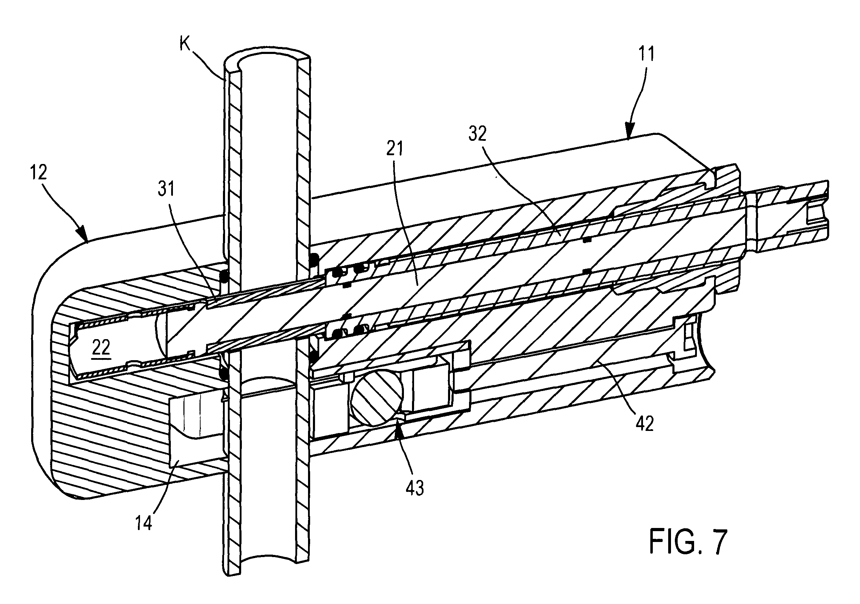

Ce procédé comprend typiquement les opérations suivantes. Tout d'abord, ce dispositif est placé sur la conduite K. L'arbre 21 de ce dispositif est manoeuvré pour perforer la conduite K comme illustré à la figure 6, puis pour obturer cette conduite comme illustré à la figure 7.

Le robinet RB est remplacé par un nouveau robinet et le robinet nouvellement monté est fermé.

Un sas étanche, par exemple du type connu par la demande de brevet FR 2 931 517, est installé sur la tête de raccordement TR.

L'arbre 21 du dispositif est manoeuvré pour déplacer les moyens d'obturation 3 et de perforation 2 hors de la conduite K.

Une vanne de sécurité, par exemple du type connu par la demande de brevet FR 2 931 517, est introduite à travers le sas dans la conduite K.

Une fois installée dans la conduite K en amont de l'orifice pratiqué dans cette conduite par le dispositif, la vanne de sécurité est déclenchée à la fermeture, la conduite K étant donc alors obturée sensiblement en amont de l'orifice pratiqué dans cette conduite.

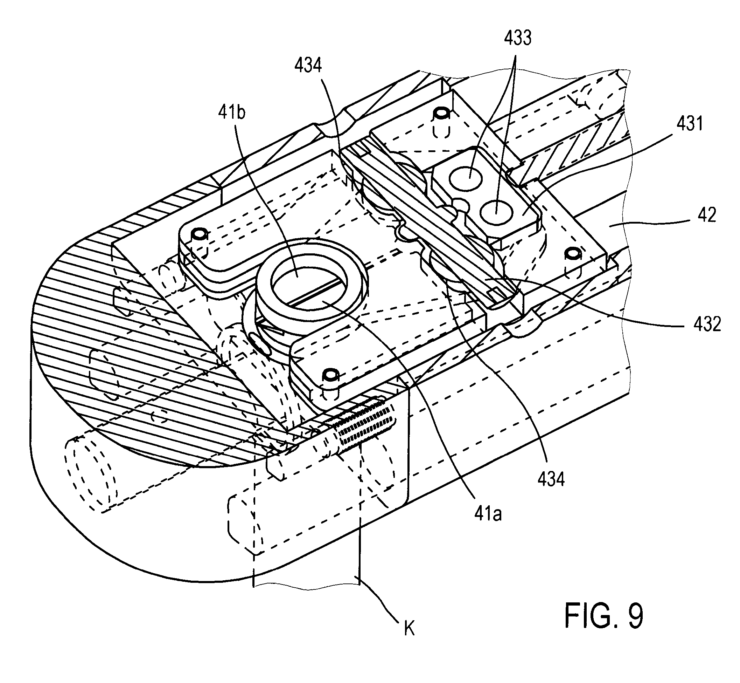

Si le dispositif est équipé de moyens de sectionnement 4, ces moyens de sectionnement sont utilisés pour sectionner la conduite K comme illustré à la figure 9.

Le dispositif peut alors être démonté, et la conduite K réparée pour lui restituer son étanchéité.

Enfin, la vanne de sécurité peut être replacée dans son état passant par application d'une contre-pression agissant à l'encontre de la pression du gaz dans la prise de branchement PB, comme indiqué dans la demande de brevet FR 2 931 517.

## Revendications

1. Dispositif d'intervention sur une conduite de gaz (K), comprenant au moins un boîtier étanche (1), des moyens de perforation (2), des moyens d'obturation (3), le boîtier (1) étant traversé, suivant une première direction (Z), par un perçage (10) adapté à recevoir la conduite (K) de façon étanche, le boîtier (1) comprenant des première et deuxième parties (11, 12) disposées de part et d'autre du plan médian du perçage (10) et reliées l'une à l'autre de façon réversible par des moyens de serrage, les première et deuxième parties (11, 12) du boîtier (1) présentent respectivement un alésage traversant (131) et un alésage borgne (132) coaxiaux, formant ensemble un premier logement (13) s'étendant suivant une deuxième direction (X) perpendiculaire à la première (Z) et traversant le perçage (10), les moyens de perforation (2) comprenant un arbre (21) monté à rotation et à coulissement de façon étanche dans le premier logement (13), et un outil de perforation (22) coaxial à l'arbre (21), l'arbre (21) présentant une première extrémité d'actionnement (211) externe à la première partie (11) du boîtier (1) et une deuxième extrémité (212) interne au boîtier (1) et portant l'outil de perforation (22), les moyens d'obturation (3) comprenant au moins un manchon expansible (31) entourant l'arbre (21), l'alésage borgne (132) étant dimensionné pour pouvoir accueillir l'outil de perforation (22) dans la position de l'arbre (21) dans laquelle le manchon (31) s'étend au moins d'un bord à l'autre du perçage (10), **caractérisé en ce que** le dispositif comprend en outre des moyens de sectionnement (4) de la conduite de gaz (K).

2. Dispositif suivant la revendication 1, **caractérisé en ce que** l'arbre (21) présente un relief radial (213) formant butée pour une première extrémité (311) du manchon (31), **en ce que** les moyens d'obturation (3) comprennent en outre une douille (32) entourant l'arbre (21) et montée coulissante dans le premier logement (13) à la fois par rapport à l'arbre (21) et par rapport à ce premier logement (13) et **en ce que** la douille (32) présente une première extrémité (321) externe à la première partie (11) du boîtier (1) et permettant l'actionnement de cette douille (32), et une deuxième extrémité (322) formant butée pour une deuxième extrémité (312) du manchon (31), ce dont il résulte que les deux extrémités (311, 312) du manchon (31) peuvent être rapprochées l'une de l'autre par coulissement relatif de l'arbre (21) et de la douille (32).

3. Dispositif suivant la revendication 1, **caractérisé en ce que** le perçage est cylindrique et **en ce que** l'outil de perforation (22) est conçu pour pratiquer dans la conduite (K) un orifice traversant de section circulaire dont le rayon est au moins égal à 90 pourcent du rayon du perçage (10).

4. Dispositif suivant l'une quelconque des revendications précédentes, **caractérisé en ce que** le boîtier (1) présente un deuxième logement (14), indépendant du premier logement (13), s'étendant suivant la deuxième direction (X), traversant le perçage (10), et dans lequel sont logés les moyens de sectionnement (4).

5. Dispositif suivant l'une quelconque des revendications précédentes, **caractérisé en ce que** les moyens de sectionnement (4) comprennent un outil de coupe (41) travaillant en cisaillement.

6. Dispositif suivant la revendication 5, **caractérisé en ce que** les moyens de sectionnement (4) comprennent en outre une tige d'actionnement (42) manoeuvrable depuis l'extérieur de la première partie (11) du boîtier (1) et un lien cinématique (43), **en ce que** l'outil de coupe (41) comprend deux lames (41a, 41b) mobiles dans un plan de coupe perpendiculaire à la première direction (Z), et **en ce que** le lien cinématique (43) relie la tige d'actionnement (42) aux lames (41a, 41b) et transforme respectivement une traction et une poussée de la tige d'actionnement (42) en un rapprochement et en un éloignement réciproque des lames (41a, 41b).

7. Dispositif suivant la revendication 6, **caractérisé en ce que** le lien cinématique (43) comprend un répartiteur d'effort (431), une barre de guidage (432), deux pivots d'extrémité (433) et deux pivots intermédiaires (434), chaque lame (41a, 41b) portant un pivot d'extrémité (433) et un pivot intermédiaire (434), **en ce que** le répartiteur (431) est lié en translation à la tige d'actionnement (42), est mobile suivant la deuxième direction (X), et porte les pivots d'extrémité (433) des deux lames (41a, 41b), **en ce que** la barre de guidage (432) est montée fixe dans le boîtier (1) entre le répartiteur (431) et le perçage (10) et s'étend suivant une troisième direction (Y) perpendiculaire à chacune des première et deuxième directions (Z, X), et **en ce que** le pivot intermédiaire (434) de chaque lame (41a, 41b) est monté coulissant sur la barre de guidage (432).

8. Procédé d'intervention sur un réseau de distribution de gaz comprenant une prise de branchement (PB), une conduite (K), et un coffret de branchement (CB), le coffret (CB) comprenant un robinet de branchement (RB) et une tête de raccordement (TR) à un sous-réseau (SR) de consommation, le robinet (RB) étant relié, vers l'amont, à la prise de branchement (PB) par l'intermédiaire de la conduite (K), et, vers l'aval, à la tête de raccordement (TR) ce procédé utilisant un dispositif suivant l'une quelconque des revendications précédentes et comprenant les opérations consistant à : placer ledit dispositif sur la conduite (K); manoeuvrer l'arbre (21) du dispositif pour perforer et obturer la conduite (K); remplacer le robinet (RB) par un nouveau robinet et fermer le robinet nouvellement monté; installer un sas étanche sur la tête de raccordement (TR); manoeuvrer l'arbre (21) du dispositif pour déplacer les moyens d'obturation (3) et de perforation (2) hors de la conduite (K); introduire à travers le sas une vanne de sécurité dans la conduite (K); déclencher à la fermeture la vanne de sécurité une fois installée dans la conduite (K) en amont de la perforation pratiquée par le dispositif; démonter le dispositif; et réparer la conduite (K) pour lui restituer son étanchéité, ce procédé comprenant une opération supplémentaire, mise en oeuvre préalablement au démontage du dispositif et consistant à sectionner la conduite (K) pour faciliter sa réparation.

## Claims

1. Device for intervention on a gas pipe (K), comprising at least one airtight case (1), perforation means (2), sealing means (3), the case (1) being bored in a first direction (Z) by a borebore (10) suitable for accommodating the pipe (K) in a airtight manner, the case (1) comprising a first and second part (11, 12) arranged on either side of the median plane of the bore (10) and connected to one another in a reversible manner by clamping means, the first and second parts (11, 12) of the case (1) presenting respectively a coaxial through bore (131) and a coaxial blind bore (132), forming together a first housing (13) extending in a second direction (X) perpendicular to the first (Z) and passing through the bore (10), the perforating means (2) comprising a shaft (21) mounted in a rotating and sliding manner, in a airtight way with the first housing (13), and a perforating tool (22) coaxial to the shaft (21), the shaft (21) presenting a first actuation end (211) external to the first part (11) of the case (1) and a second end (212) internal to the case (1) and bearing the perforating tool (22), the sealing means (3) comprising at least one expandable sleeve (31) surrounding the shaft (21), the through bore (132) being sized to be able to accommodate the perforating tool (22) in the position of the shaft (21) in which the sleeve (31) extends at least from one side to the other of the bore (10), **characterised in that** the device also comprises means for sectioning (4) the gas pipe (K).

2. Device according to claim 1, **characterised in that** the shaft (21) has a radial relief (213) forming a stop for a first end (311) of the sleeve (31), **in that** the sealing means (3) also comprise a dowel bush (32) surrounding the shaft (21) and mounted in a sliding manner in the first housing (13) both relative to the shaft (21) and relative to this first housing (13), and **in that** the dowel bush (32) has a first end (321) external to the first part (11) of the case (1) and allowing the actuation of said dowel bush (32), and a second end (322) forming a stop for a second end (312) of the sleeve (31), as a result of which the two ends (311, 312) of the sleeve (31) may be brought closer together by the relative sliding of the shaft (21) and of the dowel bush (32).

3. Device according to claim 1, **characterised in that** the bore is cylindrical and **in that** the perforating tool (22) is designed to carry out within the pipe (K) a through orifice with a circular cross-section, the radius of which is at least equal to 90 per cent of the radius of the bore (10).

4. Device according to any one of the preceding claims, **characterised in that** the case (1) comprises a second housing (14), independent of the first housing (13), extending in the second direction (X), passing through the bore (10) and in which are housed the sectioning means (4).

5. Device according to any one of the preceding claims, **characterised in that** the sectioning means (4) comprise a shear cutting tool (41).

6. Device according to claim 5, **characterised in that** the sectioning means (4) also comprise an actuation shaft (42) maniable from the exterior of the first part (11) of the case (1) and a kinematic link (43), **in that** the cutting tool (41) comprises two blades (41a, 41b), mobile in a cutting plane perpendicular to the first direction (Z), and **in that** the kinematic link (43) connects the actuation shaft (42) to the blades (41a, 41b) and transforms respectively a traction and pushing of the actuation shaft (42) into a reciprocal closure and opening of the blades (41a, 41b).

7. Device according to claim 6, **characterised in that** the kinematic link (43) comprises a load equaliser (431), a guide bar (432), two end pivots (433) and two intermediary pivots (434), each blade (41a, 41b) having an end pivot (433) and an intermediary pivot (434), **in that** the equaliser (431) is connected in translation to the actuation shaft (42), is mobile in the second direction (X) and carries the end pivots (433) of the two blades (41a, 41b), **in that** the guide bar (432) is affixed to the case (1) between the equaliser (431) and the bore (10), and extends in a third direction (Y) perpendicular to each of the first and second directions (Z, X) and **in that** the intermediary pivot (434) of each blade (41a, 41b) is mounted in a sliding manner on the guide bar (432).

8. Process for intervention in a gas distribution network comprising an attachment plug (PB), a pipe (K) and a service box (CB), the box (CB) comprising a corporation valve (RB) and a connecting head (TR) to a consumer sub-network (SR), the corporation valve (RB) being connected, upstream, to the attachment plug (PB) by means of the pipe (K), and, downstream, to the connecting head (TR), this process using a device according to any one of the preceding claims and comprising operations consisting of: placing said device on the pipe (K); manoeuvring the shaft (21) of the device in order to perforate and seal the pipe (K); replacing the corporation valve (RB) with a new valve and closing the newly installed valve; installing an airtight lock on the connecting head (TR); manoeuvring the shaft (21) of the device to move the sealing means (3) and perforating means (2) out of the pipe (K); introducing a safety choke into the pipe (K) via the lock; operating upon closure the safety choke once installed in the pipe (K) upstream of the perforation carried out by the device; removing the device; and repairing the pipe (K) in order to restore its airtightness, this process comprising an additional operation, implemented prior to the removal of the device and consisting of sectioning the pipe (K) in order to facilitate its repair.

## Patentansprüche

1. Vorrichtung für die Arbeit an einer Gasleitung (K), mit wenigstens einem dichten Gehäuse (1), Perforationsmitteln (2), Abdeckmitteln (3), wobei das Gehäuse (1) in einer ersten Richtung (Z) von einer Bohrung (10) durchquert wird, die so ausgebildet ist, dass diese die Leitung (K) in dichter Weise aufnimmt, wobei das Gehäuse (1) einen ersten und zweiten Teil (11, 12) aufweist, die beiderseits der Mittelebene der Bohrung (10) angeordnet sind und durch Verriegelungsmittel miteinander in reversibler Weise verbunden sind, wobei der erste und zweite Teil (11, 12) des Gehäuses (1) jeweils eine Durchgangsbohrung (131) bzw. eine koaxiale Blindbohrung (132) aufweisen, die zusammen eine erste Aufnahme (13) bilden, die sich in einer zweiten Richtung (X), senkrecht zu der ersten (Z) erstreckt und die Bohrung (10) durchquert, wobei die Perforationsmittel (2) aufweisen eine Welle (21), die in dichter Weise drehbar und verschiebbar in der ersten Aufnahme (13) angebracht ist, und ein Perforationswerkzeug (22), koaxial zur Welle (21), wobei die Welle (21) ein erstes Betätigungsende (211) außerhalb des ersten Teils (11) des Gehäuses (1) und ein das Perforationswerkzeug (22) tragendes zweites Ende (212) innerhalb des Gehäuses (1) aufweist, wobei die Abdeckmittel (3) wenigstens eine die Welle (21) umgebende, dehnbare Muffe (31) aufweisen, wobei die Blindbohrung (132) so dimensioniert ist, dass diese das Perforationswerkzeug (22) in der Position der Welle (21) aufnehmen kann, in welcher sich die Muffe (31) wenigstens beiderseits der Bohrung (10) erstreckt, **dadurch gekennzeichnet, dass** die Vorrichtung ferner Durchtrennungsmittel (4) für die Gasleitung (K) aufweist.

2. Vorrichtung nach Anspruch 1, **dadurch gekennzeichnet, dass** die Welle (21) einen radialen Vorsprung (213) aufweist, der für ein erstes Ende (311) der Muffe (31) einen Anschlag bildet, dass die Abdeckmittel (3) ferner eine Hülse (32) aufweisen, welche die Welle (21) umgibt und verschiebbar in der ersten Aufnahme (13) sowohl in Bezug zu der Welle (21) als auch in Bezug zu der ersten Aufnahme (13) angebracht ist, und dass die Hülse (32) aufweist ein erstes Ende (321) außerhalb des ersten Teils (11) des Gehäuses (1), welches die Betätigung dieser Hülse (32) ermöglicht, und ein zweites Ende (322), das für ein zweites Ende (312) der Muffe (31) einen Anschlag bildet, woraus sich ergibt, dass die zwei Enden (311, 312) der Muffe (31) durch eine Relatiwerschiebung der Welle (21) und der Hülse (32) zusammengeschoben werden können.

3. Vorrichtung nach Anspruch 1, **dadurch gekennzeichnet, dass** die Bohrung zylindrisch ist und dass das Perforationswerkzeug (22) vorgesehen ist, um in die Leitung (K) eine Öffnung mit kreisförmigem Querschnitt einzubringen, deren Radius kleiner gleich 90 Prozent des Radius der Bohrung (10) beträgt.

4. Vorrichtung nach einem der vorhergehenden Ansprüche, **dadurch gekennzeichnet, dass** das Gehäuse (1) eine zweite Aufnahme (14) aufweist, unabhängig von der ersten Aufnahme (13), die sich in der zweiten Richtung (X) erstreckt, durch die Bohrung (10) hindurchgeht und in welcher die Durchtrennungsmittel (4) aufgenommen sind.

5. Vorrichtung nach einem der vorhergehenden Ansprüche, **dadurch gekennzeichnet, dass** die Durchtrennungsmittel (4) ein Schneidewerkzeug (41) umfassen, das mit Scherkraft arbeitet.

6. Vorrichtung nach Anspruch 5, **dadurch gekennzeichnet, dass** die Durchtrennungsmittel (4) ferner umfassen eine Betätigungsstange (42), die von der Außenseite des ersten Teils (11) des Gehäuses (1) aus handhabbar ist, und ein kinematisches Band (43), dass das Schneidewerkzeug (41) zwei Klingen (41a, 41b) umfasst, die in einer Schnittebene senkrecht zu der ersten Richtung (Z) beweglich sind, und dass das kinematische Band (43) mit der Betätigungsstange (42) der Klingen (41a, 41b) verbunden ist und jeweils einen Zug und einen Druck auf die Betätigungsstange (42) bei einer gegenseitigen Annäherung und Entfernung der Klingen (41a, 41b) überträgt.

7. Vorrichtung nach Anspruch 6, **dadurch gekennzeichnet, dass** das kinematische Band (43) einen Kraftverteiler (431), ein Führungsglied (432), zwei Endgelenke (433) und zwei Zwischengelenke (434) umfasst, wobei jede Klinge (41a, 41b) ein Endgelenk (433) und ein Zwischengelenk (434) trägt, dass der Verteiler (431) translatorisch mit der Betätigungsstange (42) verbunden ist, beweglich in der zweiten Richtung (X) ist und die Endgelenke (433) der zwei Klingen (41a, 41b) trägt, dass das Führungsglied (432) fest in dem Gehäuse (1) zwischen dem Verteiler (431) und der Bohrung (10) angebracht ist und sich in einer dritten Richtung (Y), senkrecht sowohl zur ersten als auch zur zweiten Richtung (Z, X) erstreckt, und dass das Zwischengelenk (434) jeder Klinge (41a, 41b) verschiebbar auf dem Führungsglied (432) angebracht ist.

8. Arbeitsverfahren an einem Gasverteilernetz, mit einer Verzweigungsstelle (PB), einer Leitung (K) und einem Verzweigungskasten (CB), wobei der Kasten (CB) einen Verzweigungshahn (RB) und einen Verbindungskopf (TR) zu einem Verbrauchs-Unternetz (SR) aufweist, wobei der Hahn (RB) verbunden ist stromaufwärts über die Leitung (K) mit der Verzweigungsstelle (PB) und stromabwärts mit dem Verbindungskopf (TR), wobei das Verfahren eine Vorrichtung nach einem der vorhergehenden Ansprüche verwendet und die Arbeitsschritte umfasst, bestehend aus: Setzen der Vorrichtung auf die Leitung (K); Handhaben der Welle (21) der Vorrichtung, um die Leitung (K) zu perforieren und zu verschließen; Austauschen des Hahns (RB) durch einen neuen Hahn und Schließen des neu montierten Hahns; Installieren einer dichten Schleuse auf dem Verbindungskopf (TR); Handhaben der Welle (21) der Vorrichtung, um die Mittel zur Abdeckung (3) und Perforation (2) aus der Leitung (K) zu schieben; Einführen eines Sicherheitsventils in die Leitung (K), quer zur Schleuse; Auslösen der Schließung des Sicherheitsventils, sobald dieses in die Leitung (K) stromaufwärts der durch die Vorrichtung eingebrachten Perforation installiert ist; Demontieren der Vorrichtung; und Reparieren der Leitung (K), damit diese ihre Dichtigkeit wieder erhält, wobei das Verfahren einen zusätzlichen Vorgang umfasst, der vor der Demontage der Vorrichtung durchgeführt wird und darin besteht, die Leitung (K) zu durchtrennen, um ihre Reparatur zu erleichtern.
